# EUROPEAN PATENT APPLICATION

(11) **EP 4 671 707 A1**
(43) Date of publication of application: **31.12.2025**
(21) Application number: 25183591.4
(22) Date of filing: 18.06.2025
(51) Int. Cl.: G01G 21/28, G01G 19/414

(54) **FOOD PRODUCT SCALE AND ASSOCIATED DISPLAY MOUNTING SYSTEM AND METHOD**

(30) Priority: 27.06.2024 US 202418756758
(71) Applicant: Illinois Tool Works Inc., Glenview IL 60025 (US)
(72) Inventor: HOLMES, Robert Andrew, Glenview, 60025 (US); TAYLOR, Ian D., Glenview, 60025 (US); REDMAN, Randall L., Glenview, 60025 (US); KNOBLAUCH, Austin, Glenview, 60025 (US)
(74) Representative: HGF

(57) **Abstract**

A scale system includes a scale body including a weighing station, the scale body comprising a base casting that defines a first mount feature set and a second mount feature set. A display mount base is configured to enable mating engagement of the display mount base with either the first mount feature set or the second mount feature set. Mating engagement of the display mount base with the first mount feature set defines a first lateral position of the display mount base along a front side of the scale, and mating engagement of the display mount base with the second mount feature set defines a second lateral position of the display mount base along the front side of the scale.

## Description

### TECHNICAL FIELD

This application relates generally to scales used for weighing food product in supermarkets, groceries and other stores, and, more particularly, to a scale and method using different display device sizes.

### BACKGROUND

In typical commercial food product scale applications the scale is used to weigh food products and determines prices for the food products, and an associated printer prints a label for application to the food product. An operator enters a product number, such as a PLU (price look-up) number, for the product being weighed and the scale accesses its database, or accesses a remote database, for pricing information on the product. The total price for the item is then determined based upon its weight. Price can also be determined based upon item count. In either case, the food product scale typically prints a label with the price and other information for the product.

Such scales may commonly incorporate an operator interface in the form of a display device. Different end users may prefer different display device sizes depending upon the intended use of the scale, intended location for the scale and/or type of individual that will be operating the scale.

It would be desirable to provide a scale and method that is adaptable to use with different display device sizes.

### SUMMARY

In one aspect, a scale system includes a scale body including a weighing station, the scale body comprising a base casting that defines a first mount feature set and a second mount feature set. A display mount base is configured to enable mating engagement of the display mount base with either the first mount feature set or the second mount feature set. Mating engagement of the display mount base with the first mount feature set defines a first lateral position of the display mount base along a front side of the scale, and mating engagement of the display mount base with the second mount feature set defines a second lateral position of the display mount base along the front side of the scale.

In another aspect, a method is provided for manufacturing a first scale device and a second scale device, wherein the first scale device incorporates a first display of a first size and the second scale device incorporates a second display of a second size that is different than the first size. The method involves: utilizing a standard base casting that defines a first mount feature set and a second mount feature set, and utilizing a standard display mount base configured to enable mating engagement of the standard display mount base with either the first mount feature set or the second mount feature set. Manufacture the first scale device involves: using a first instance of the standard base casting and a first instance of the standard display mount base; and matingly engaging the first instance of the standard display mount base with the first mount feature set of the of the first instance of the standard base casting. Manufacture the second scale device involves: using a second instance of the standard base casting and a second instance of the standard display mount base; and matingly engaging the second instance of the standard display mount base with the second mount feature set of the of the second instance of the standard base casting.

The details of one or more embodiments are set forth in the accompanying drawings and the description below. Other features, objects, and advantages will be apparent from the description and drawings, and from the claims.

### BRIEF DESCRIPTION OF THE DRAWINGS

Figs. 1 and 2 show perspective views of a scale;
Fig. 3 shows a perspective view with label cassette removed;
Fig. 4 shows a partial perspective of a printhead region within the cassette receiving station;
Fig. 5 is a perspective view of a base casting of the scale;
Figs. 6 and 7 are partial perspectives showing display mounting;
Figs. 8 and 9 are partial perspectives showing different possible display mounting locations;
Figs. 10-11 show perspective views of the mount segment of the base casting in isolation;
Figs. 12-13 show perspective views of the mount segment of the base casting and display mount base of the display;
Figs. 14-16 shows one scale device or portions thereof; and
Figs. 17-19 show another scale device or portions thereof.

### DETAILED DESCRIPTION

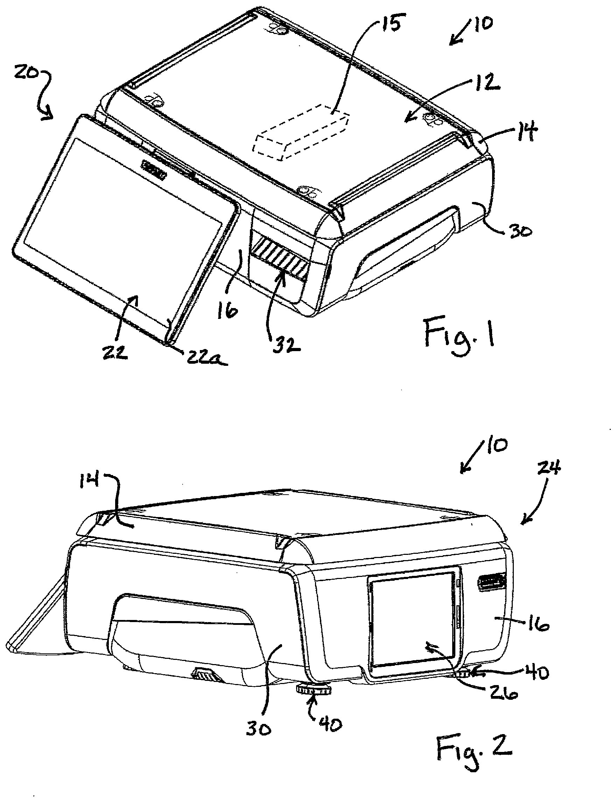

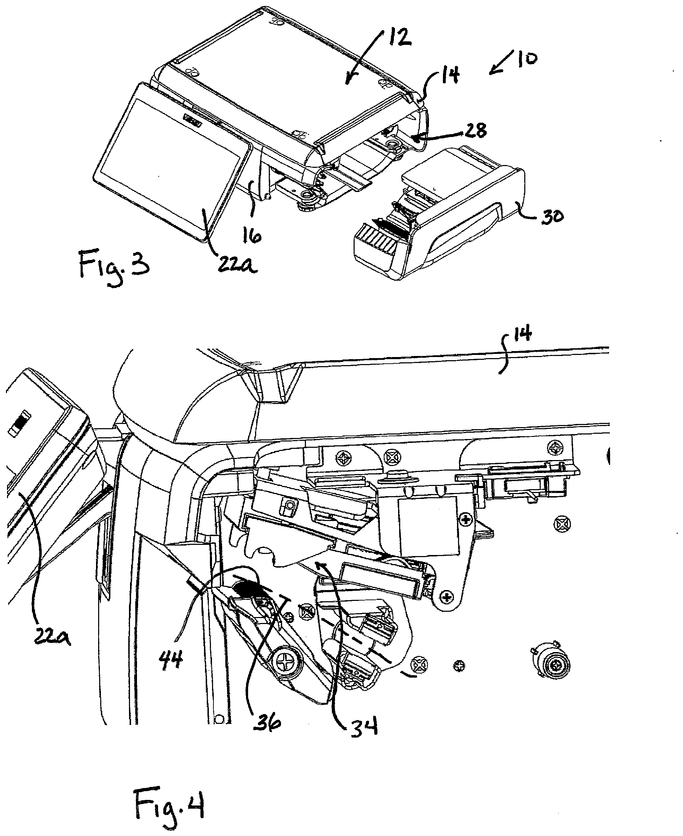

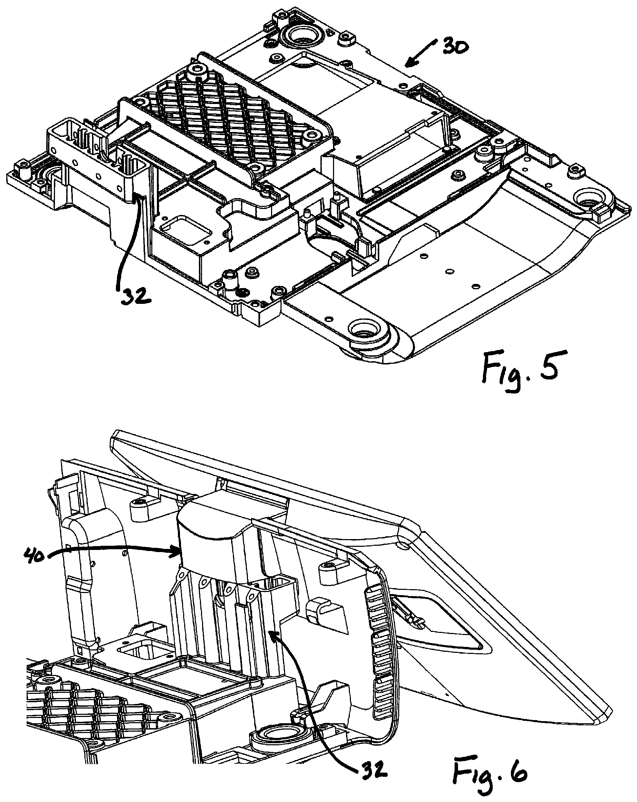

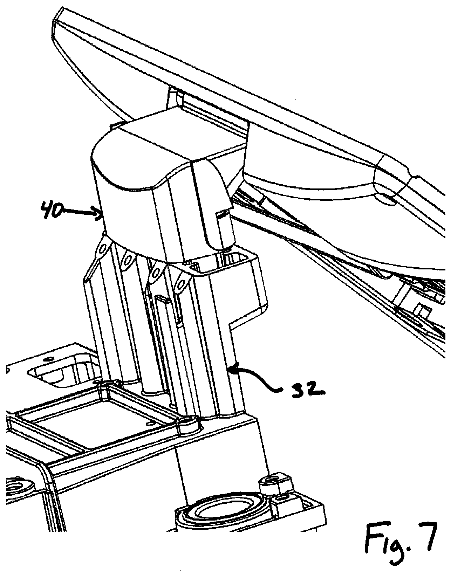

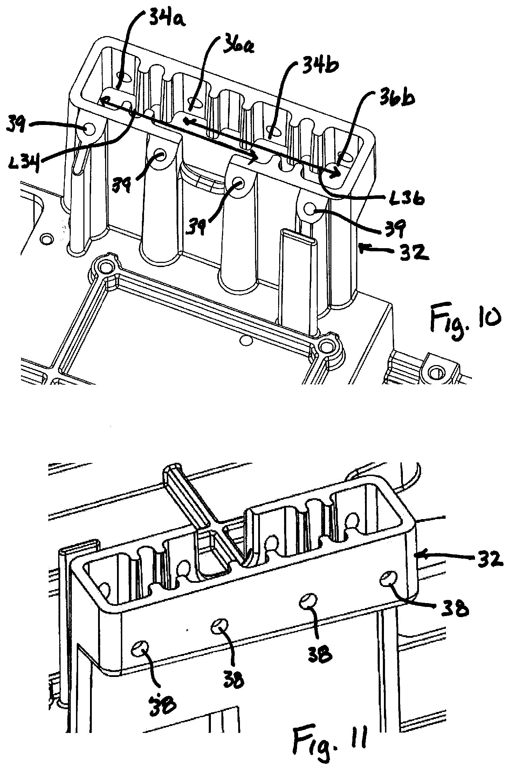

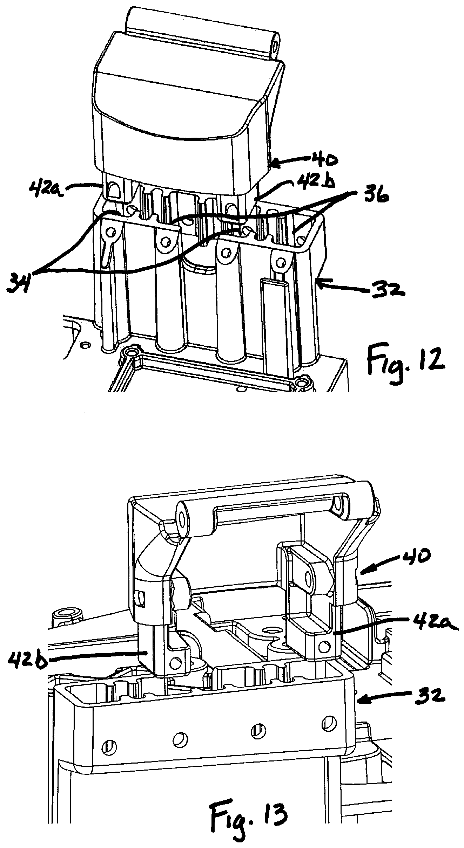

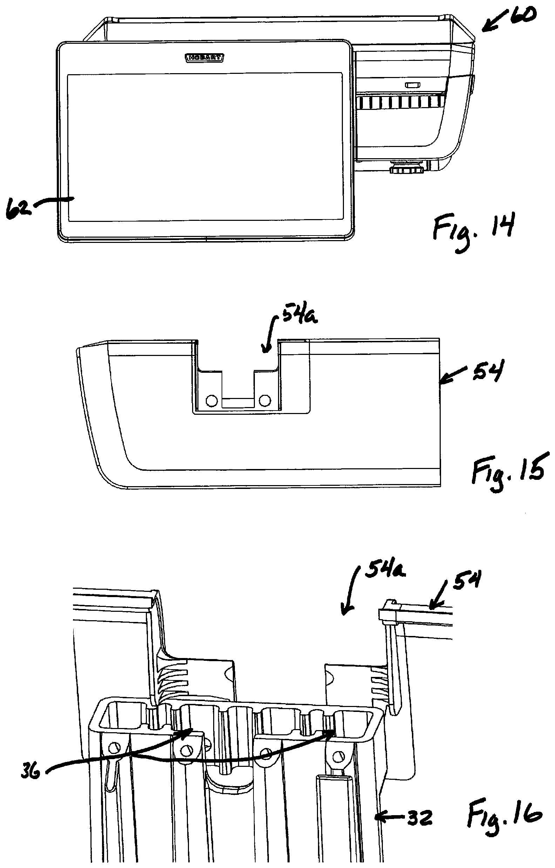

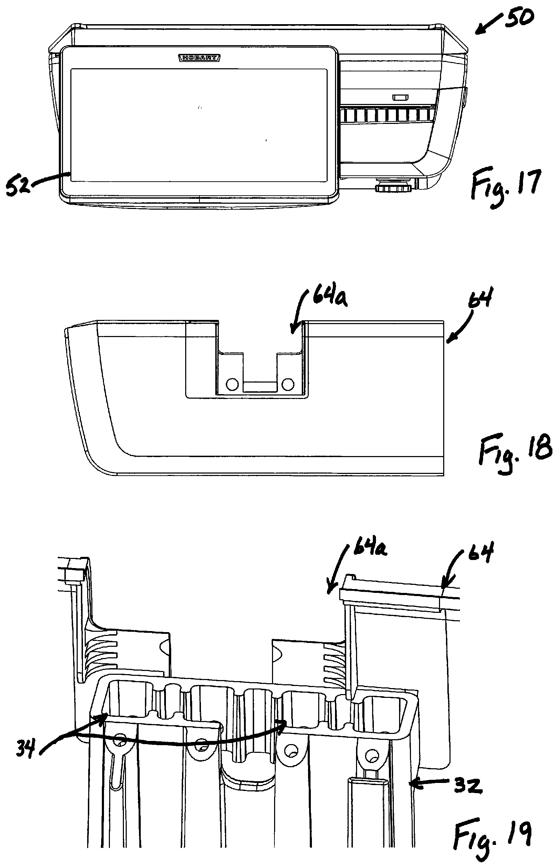

Referring to Figs. 1-19, an exemplary scale configuration, or portions thereof, is shown. The scale 10 includes a weighing station 12, which in some embodiments may be formed by a weighing platter 14 that can be removed (e.g., for cleaning) from atop the scale body 16. A platter support bracket (not shown) transfers forces to a mechanism, such as a load cell 15 located internal of the scale body 16, for producing weight indicative signals when items are placed on the weighing station. An operator interface side 20 of the scale includes an operator interface 22 configured to display information associated with scale operations. By way of example, the operator interface 22 may be formed by a touch-screen display 22a. A customer interface side 24 of the scale includes a customer interface 26, which in certain embodiments may be formed by any suitable display screen technology.

A side portion of the scale body incudes a cassette station 28 that receives a removable label stock cassette 30 that defines a label exit slot 32. A printhead assembly 34 is located within the scale body along a label stock path 36 and may use any suitable printing technology for printing on labels of a label supply roll loaded in the cassette 30, which printed labels then exit the label exit slot 32 to be applied to products. For example, the printhead assembly may carry a thermal printhead for printing on thermal label stock.

The printhead assembly 34 is pivotably mounted to a wall 38 of the scale body by a support bracket 40 which is capable of rotation about an axis 42. The printhead assembly pivots toward a print roller 44 when the cassette is loaded into the cassette station, placing the label stock between the printhead assembly 34 and the print roller 44 for the purpose of printing. Here, the printhead assembly 34 is located at an upper side of the label stock path 36 and the print roller 44 is located at a lower side of the label stock path 36.

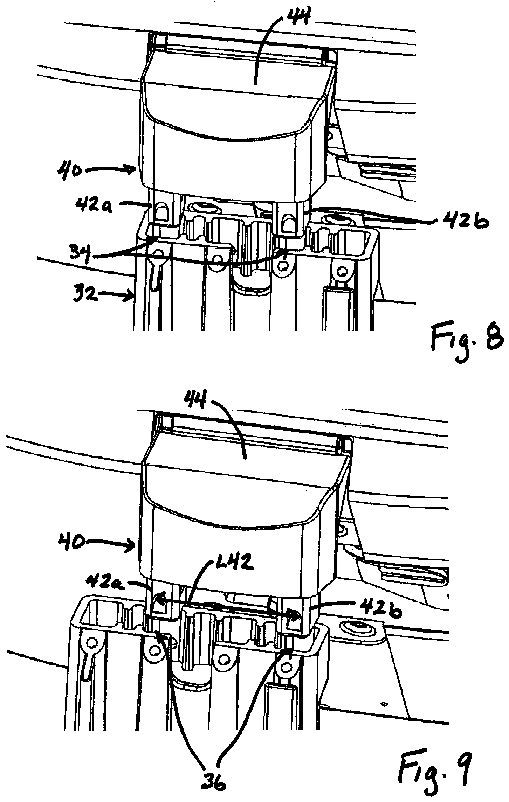

Here, the scale body 16 comprises a base component 30, in the form of a metal (e.g., aluminum) base casting, and various other housing parts that collectively define an internal space and framing of the scale. The operator interface 22 is formed by a display 22a (e.g., a touch-screen display). The display 22a must be mounted on the scale in a desired lateral position along the front of the scale. For this purpose, the base casting 30 includes an upwardly extending display mount segment 32 that defines different locations for display mounting. More specifically, the display mount segment defines both a mount feature set 34 and a mount feature set 36. A display mount base 40, to which the display device is connected, is configured to enable mating engagement of the display mount base with either the mount feature set 34 or the mount feature set 36. Mating engagement of the display mount base 40 with the mount feature set 34 will define one lateral position of the display mount base 40 along a front side of the scale (per Fig. 8), and mating engagement of the display mount base 40 with the second mount feature set will define another lateral position of the display mount base 40 along the front side of the scale (per Fig. 9).

Here, the mount feature set 34 comprises laterally spaced apart pockets 34a and 34b, and the mount feature set 36 comprises laterally spaced apart pockets 36a and 36b. Notably, a lateral spacing L34 between the pockets 34a and 34b is the same as a lateral spacing L36 between the pockets 36a and 36b. The display mount base 40 comprises laterally spaced apart posts 42a and 42b. A lateral spacing L42 between the posts is the same as the lateral spacings L34 and L36, which enables alignment and engagement of the posts 42a and 42b down into the pockets 34a and 34b or down into the pockets 36a and 36b.

Here, the pocket 36a is located laterally between the pocket 34a and the pocket 34b, and the pocket 34b is located laterally between the pocket 36a and the pocket 36b. If the display mount base 40 is engaged with the pockets 34a and 34b, a post spanning portion 44 of the display mount base 40 will overly the pocket 36a. If the display mount base 40 is engaged with the pockets 36a and 36b, the post spanning portion 44 of the display mount base 40 will overly the pocket 34b.

Each pocket includes both a front fastener opening 38 and a back fastener opening 39, either or both of which can be used to secure and hold the posts into the pockets (e.g., using screws).

Per the above description, the base casting 30 and the display mount base are configured to permit selective position of a lateral position of a display along the front of the scale, as desired or need. This system provides a significant manufacturing advantage in that only a single, standard base casting component 30 and a single, standard display mount base component 40 are needed to enable manufacture of different scale configurations.

Thus, the system enables a method of manufacturing both a scale device 50 and a scale device 60, wherein the scale device 50 incorporates a display 52 and the scale device 60 incorporates a different size display 62. To manufacture the scale device 50, a first instance of the standard base casting 30 and a first instance of the standard display mount base 40 are used, and the first instance of the standard display mount base is matingly engaged with the mount feature set 34 of the of the first instance of the standard base casting 30. To manufacture the second scale device 60, a second instance of the standard base casting 30 and a second instance of the standard display mount base 40 are used, and the second instance of the standard display mount base 40 is matingly engaged with the mount feature set 36 of the of the second instance of the standard base casting 30.

In order to account for the different position of the display mount base as between the scale device 50 and the scale device 60 different front covers are also used. More specifically, when manufacturing the scale device 50, a front cover 54 that includes a an upwardly facing slot 54a is used and the upwardly facing slot 54a is aligned below the first instance of the standard display mount base 40 and in front of the mount feature set 34. When manufacturing the scale device 60, a front cover 64 that includes am upwardly facing slot 64 is used and the upwardly facing slot 64a is aligned below the second instance of the standard display mount base 40 and in front of the mount feature set 36. Notably, a lateral location of the upwardly facing slot 54a on the front cover 54 is different than a lateral location of the upwardly facing slot 64a on the front cover 64, as needed.

The described system provides an arrangement whereby the scale base casting 30 has moulded in features (e.g., pockets) to allow for the position in which the display is mounted to be moved. The casting has two positions in which the display assembly can be mounted. Two different mounting locations are required for the different sized operator displays (e.g., 10.1", 11.6" and 13.3"). This offers flexibility in manufacturing to only use one standard base casting that can accommodate all the different display sizes.

It is to be clearly understood that the above description is intended by way of illustration and example only, is not intended to be taken by way of limitation, and that other changes and modifications are possible.

## Claims

1. A scale system, comprising:
a scale body including a weighing station, the scale body comprising a base casting that defines a first mount feature set and a second mount feature set;
a display mount base configured to enable mating engagement of the display mount base with either the first mount feature set or the second mount feature set;
wherein mating engagement of the display mount base with the first mount feature set defines a first lateral position of the display mount base along a front side of the scale, wherein mating engagement of the display mount base with the second mount feature set defines a second lateral position of the display mount base along the front side of the scale.

2. The scale system of claim 1, wherein the first mount feature set comprises first and second laterally spaced apart pockets, the second mount feature set comprises third and fourth laterally spaced apart pockets, wherein a lateral spacing between the first and second pockets is the same as a lateral spacing between the third and fourth pockets, wherein the display mount base comprises laterally spaced apart first and second posts, wherein a lateral spacing between the first and second posts is the same as the lateral spacing between the first and second pockets, wherein the first and second posts are configured for engagement down into the first and second pockets or down into the third and fourth pockets.

3. The scale system of claim 2, wherein the third pocket is located laterally between the first pocket and the second pocket, wherein the second pocket is located laterally between the third pocket and the fourth pocket, wherein, if the display mount base is engaged with the first and second pockets, a portion of the display mount base overlies the third pocket, wherein, if the display mount base is engaged with the third and fourth pockets, the portion of the display mount base overlies the second pocket.

4. A method of manufacturing a first scale device and a second scale device, wherein the first scale device incorporates a first display of a first size and the second scale device incorporates a second display of a second size that is different than the first size, the method comprising:
utilizing a standard base casting that defines a first mount feature set and a second mount feature set;
utilizing a standard display mount base configured to enable mating engagement of the standard display mount base with either the first mount feature set or the second mount feature set;
to manufacture the first scale device:
using a first instance of the standard base casting and a first instance of the standard display mount base;
matingly engaging the first instance of the standard display mount base with the first mount feature set of the of the first instance of the standard base casting;
to manufacture the second scale device:
using a second instance of the standard base casting and a second instance of the standard display mount base;
matingly engaging the second instance of the standard display mount base with the second mount feature set of the of the second instance of the standard base casting.

5. The method of claim 4, wherein:
mating engagement of the first instance of the standard display mount base with the first mount feature set of the first instance of the standard base casting defines a first lateral position of the first instance of the standard display mount base relative to the first instance of the standard base casting;
mating engagement of the second instance of the standard display mount base with the second mount feature set of the second instance of the standard base casting defines a second lateral position of the second instance of the standard display mount base relative to the second instance of the standard base casting.

6. The method of claim 4, wherein:
for each instance of the standard base casting, the first mount feature set comprises first and second laterally spaced apart pockets, and the second mount feature set comprises third and fourth laterally spaced apart pockets, wherein a lateral spacing between the first and second pockets is the same as a lateral spacing between the third and fourth pockets;
each instance of the standard display mount base comprises laterally spaced apart first and second posts, wherein a lateral spacing between the first and second posts is the same as the lateral spacing between the first and second pockets, wherein the first and second posts are configured for engagement down into the first and second pockets or down into the third and fourth pockets.

7. The method of claim 6, wherein, for each instance of the standard base casting, the third pocket is located laterally between the first pocket and the second pocket, and the second pocket is located laterally between the third pocket and the fourth pocket.

8. The method of claim 4, further comprising:
to manufacture the first scale device:
using a first front cover that includes a first upwardly facing slot, and aligning the first upwardly facing slot below the first instance of the standard display mount base;
to manufacture the second scale device:
using a second front cover that includes a second upwardly facing slot, and aligning the second upwardly facing slot below the second instance of the standard display mount base;
wherein a lateral location of the first upwardly facing slot on the first front cover is different than a lateral location of the second upwardly facing slot on the second front cover.
